# EUROPÄISCHE PATENTSCHRIFT

(11) **EP 1 369 028 B1**
(45) Veröffentlichungstag und Bekanntmachung des Hinweises auf die Patenterteilung: **17.01.2007**
(21) Anmeldenummer: 02405455.3
(22) Anmeldetag: 06.06.2002
(51) Int. Cl.: A01G 25/02

(54) **Tropfbewässerungsrohr**
Drip irrigation tube
Tuyau d'irrigation par égouttements

(43) Veröffentlichungstag der Anmeldung: 10.12.2003
(73) Patentinhaber: Kertscher, Eberhard, 1462 Yvonand (CH)
(72) Erfinder: Kertscher, Eberhard, 1462 Yvonand (CH)
(74) Vertreter: BOVARD AG

(56) Entgegenhaltungen:
- EP-A- 0 070 582
- EP-A- 0 715 926
- US-A- 4 385 727
- US-A- 4 473 525
- US-B1- 6 213 408

## Beschreibung

Die vorliegende Erfindung bezieht sich auf ein Tropfbewässerungsrohr gemäss dem Oberbegriff des Patentanspruchs 1.

Derartige Tropfbewässerungsrohre sind bekannt. Diese werden insbesondere zur direkten Bewässerung von Pflanzen verwendet. Im Bereich jeder Pflanze ist hierzu im Rohr mindestens ein Dosierelement angebracht, durch welches das Wasser über eine Durchgangsöffnung tropfweise ausgelassen wird. Mit derartigen Tropfbewässerungsrohren kann das Wasser sehr sparsam und effizient eingesetzt werden.

Bei der Herstellung von derartigen Tropfbewässerungsrohren werden die Durchgangsöffnungen durch mechanische Bohreinrichtungen oder mittels eines in Laseranordnungen erzeugten Laserstrahls, wie dies beispielsweise aus der EP-A-0 715 926 bekannt ist, angebracht.

Insbesondere bei Tropfbewässerungsrohren, welche mehrjährig verwendet werden, und die in das Erdreich eingelegt werden, besteht die Gefahr, dass bei einem Bewässerungsunterbruch aus irgend welchen Gründen, bei welchem im Innem des Bewässerungsrohres ein Druckabfall stattfindet, Verschmutzungsteilchen aus dem Erdreich durch die Durchgangsöffnung in das Labyrinth des Dosierelementes gelangen können. Dies kann zu einer Verstopfung dieses Dosierelementes führen, die erwünschte Bewässerung der im Bereich dieser Durchgangsöffnung sich befindenden Pflanze wird gestört. Dies kann zu einem Verkümmern dieser Pflanze und bis zum Absterben führen.

Durch diese Durchgangsöffnungen in den Tropfbewässerungsrohren können auch Wurzeln in die zweite Kammer eindringen, was ebenfalls eine Störung des Bewässerungsvorgangs mit den oben genannten Folgen nach sich ziehen kann.

Die Aufgabe der Erfindung besteht nun darin, ein Tropfbewässerungsrohr so zu gestalten, dass das Eindringen von Schmutzpartikeln durch die Durchgangsöffnungen in die Labyrinthe der Dosierelemente und das Eindringen von Wurzelwerk von Pflanzen vermieden wird.

Erfindungsgemäss erfolgt die Lösung dieser Aufgabe durch die im Anspruch 1 aufgeführten Merkmale.

Indem die Abdeckung aus mindestens einer Klappe gebildet ist, die im geschlossenen Zustand in der entsprechenden Durchgangsöffnung liegt und zum Auslass von Wasser aus der entsprechenden Durchgangsöffnung aufschwenkbar ist, wird eine einfach wirkende und einfach herstellbare Einrichtung erhalten, die das Vermeiden von Eintritt von Schmutzpartikeln und Wurzelwerk von Pflanzen in den Bereich der Dosierelemente gewährleistet. Die Herstellung der erfindungsgemässen Tropfbewässerungsrohre wird besonders einfach und kostengünstig, da die mindestens eine Klappe aus mindestens einer Zunge besteht, die aus der Wandung des Rohrkörpers ausgeschnitten ist und die über mindestens einen stehen gelassenen Steg mit dem Rohrkörper verbunden bleibt.

Gemäss einer Ausführungsform der Erfindung sind die in die Wandung des Rohrkörpers eingelassenen Schnittlinien bogenförmig ausgebildet und die Schnittflächen konisch geneigt, derart, dass sich der so gebildete Konus gegen die Innenseite des Rohrkörpers verjüngt. Dadurch wird ein optimaler Verschluss der jeweiligen Durchgangsöffnungen erreicht, wenn der Druck des Wassers im Rohrkörper abfällt.

Eine weitere vorteilhafte Ausführungsform der Erfindung besteht darin, dass die Schnitte im wesentlichen gradlinig ausgebildet sind und sich schneiden. Dadurch wird eine sehr einfache Herstellungsart erhalten, die mit einfachen Mitteln durchführbar ist.

In vorteilhafter Weise sind die Schnitte kreuzförmig angelegt, dadurch werden vier Klappen gebildet, deren gegeneinander gerichtete Spitzen zum Auslassen von Wasser angehoben werden, und die sich bei Druckabfall des Wassers im Rohr zurückbewegen und die Durchgangsöffnung verschliessen.

Eine weitere vorteilhafte Ausgestaltung der Erfindung besteht darin, dass in die Wandung des Rohrkörpers im Bereich des Steges der Zunge eine Kerbe angebracht ist, die sich mindestens über einen Teil der Breite der Zunge erstreckt. Dadurch wird quasi ein Scharnier geschaffen, durch welches die Öffnungs- und Schliessbewegung der Zunge insbesondere bei dickwandigeren Rohrkörpern erleichtert wird.

Ausführungsformen der vorliegenden Erfindung werden nachfolgend anhand der beiliegenden Zeichnung beispielhaft näher erläutert.

Es zeigt
Fig. 1 in schematischer Darstellung die Herstellung eines Tropfbewässerungsrohres;
Fig. 2 einen Längsschnitt durch den Rohrkörper des Tropfbewässerungsrohres im Bereich eines eingesetzten Dosierelementes;
Fig. 3 bis 5 Beispiele von aus der Wandung des Rohrkörpers ausgeschnittenen Zungen;
Fig. 6 eine Schnittdarstellung entlang Linie Vl-Vl der Rohrwandung gemäss Fig. 4;
Fig. 7 eine Schnittdarstellung entlang Linie VII-VII der Rohrwandung gemäss Fig. 4;
Fig. 8 eine Darstellung von kreuzförmig angelegten Schnitten, im offenen bzw. im geschlossenen Zustand; und

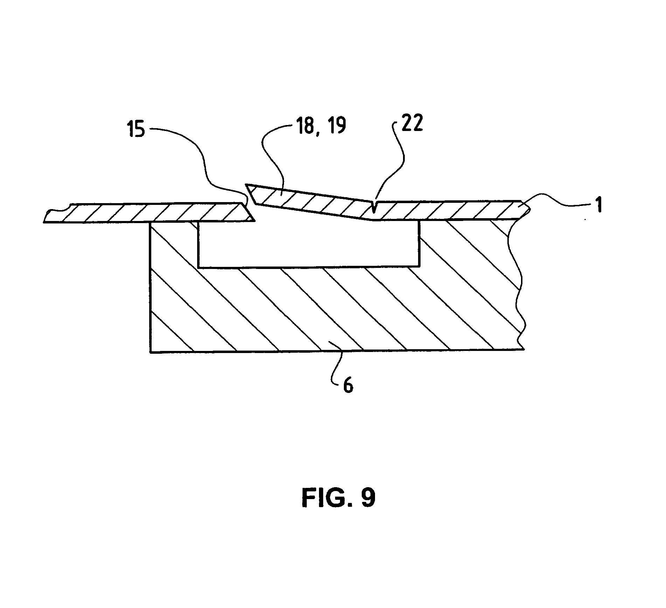

Fig. 9 eine Schnittdarstellung des Rohrkörpers in Längsrichtung einer Zunge.

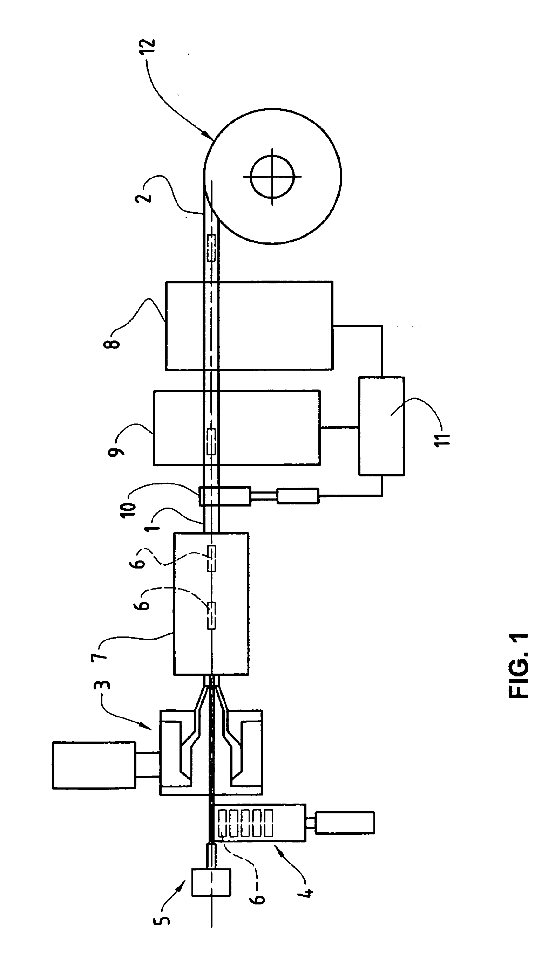

In Fig. 1 ist schematisch dargestellt, wie der Rohrkörper 1 des Tropfbewässerungsrohres 2 in bekannter Weise durch eine Extrusionsvorrichtung 3 in kontinuierlicher Weise gebildet wird. In diesen extrudierten Rohrkörper 1 wird aus einem Magazin über eine Zuführeinrichtung 5 jeweils ein Dosierelement 6 eingesetzt, das vom vorhergehenden einen bestimmten Abstand hat. Der extrudierte Rohrkörper 1 wird dann mit den eingesetzten Dosierelementen 6 durch eine Kalibrier- und Kühlvorrichtung 7 geführt, in welcher eine dichte Verbindung zwischen Rohrkörper 1 und Dosierelement 6 erhalten wird.

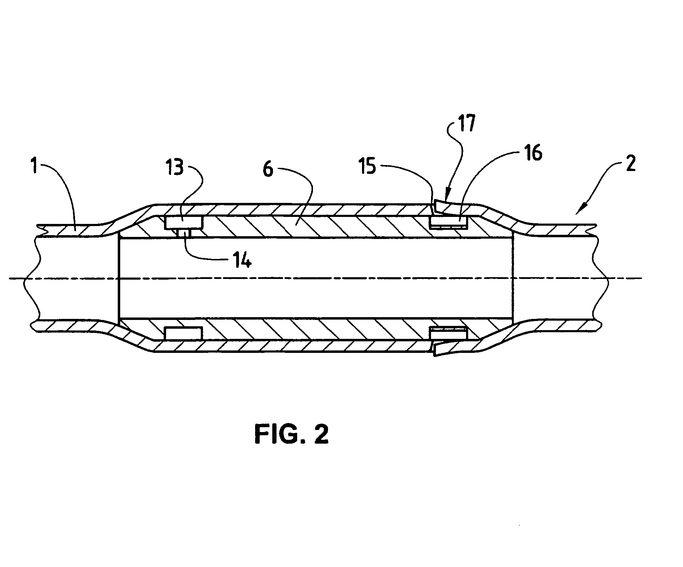

Der Rohrkörper 1 mit den eingesetzten Dosierelementen 6 wird durch eine Vorschubeinrichtung 8 durch eine Anordnung 9 geleitet, in welcher in den Rohrkörper 1 die Durchgangsöffnungen 15 (Fig. 2) angebracht werden.

Über eine Detektoreinrichtung 10 kann in bekannter Weise festgestellt werden, an welcher Position diese Dosierelemente 6 beim durchlaufenden Rohrkörper 1 angeordnet sind. Diese Detektoreinrichtung 10 gibt ein entsprechendes Signal an eine Steuereinrichtung 11 ab, welche ebenfalls mit der Vorschubeinrichtung 8 verbunden ist. Dadurch kann durch die Anordnung 9 unter Berücksichtigung der Vorschubgeschwindigkeit und bei Kenntnis des Abstandes der Detektoreinrichtung 10 im richtigen Moment die Anordnung 9 aktiviert werden, so dass die Durchgangsöffnung 15 über dem gewünschten Bereich des Dosierelementes 6 angebracht wird. Das so fertig gestellte Tropfbewässerungsrohr 2 kann beispielsweise danach auf eine Wickelvorrichtung 12 aufgewickelt werden.

Zur Konstanthaltung der Geschwindigkeit des Produktes kann auch vor dem Detektor eine Abzugeinrichtung vorgesehen werden.

Fig. 2 zeigt einen Ausschnitt eines Tropfbewässerungsrohres 2, dargestellt im Schnitt, mit einem eingesetzten Dosierelement 6, das als Hohlzylinder ausgebildet ist. Dieses Dosierelement 6 wird während des Extrusionsvorgangs zur Herstellung des Rohrkörpers 1 eingesetzt. In der Kalibrier- und Kühleinrichtung 7 (Fig. 1) legt sich der Rohrkörper 1 in absolut dichter Weise an die Aussenseite des Dosierelementes 6 an. An Stelle eines als Hohlzylinder ausgebildeten Dosierelementes 6 könnten aber auch anders gebildete, bekannte Dosierelemente eingesetzt werden, die beispielsweise plattenförmig ausgebildet sind, und an die innere Oberfläche des Rohrkörpers angelegt und während des Extrusionsvorgangs mit diesem verbunden werden.

Das in Fig. 2 dargestellte Dosierelement 6 weist eine erste Kammer 13 auf, die über mindestens eine Öffnung 14 mit dem Innenraum des Dosierelementes 6 bzw. des Rohrkörpers 1 verbunden ist. Das durch das Tropfbewässerungsrohr 2 hindurchgeleitete Wasser gelangt über diese Öffnung 14 in die erste Kammer 13 des Dosierelementes 6, die ringförmig ausgebildet ist. Im Dosierelement 6 ist eine zweite Kammer 16 angeordnet, die von der ersten Kammer 13 beabstandet ist. Auch diese zweite Kammer 16 ist im vorliegenden Ausführungsbeispiel ringförmig ausgebildet. Im Bereich dieser zweiten Kammer 16 ist die Durchgangsöffnung 15 angebracht, die später noch beschrieben wird. Zwischen der ersten Kammer 13 und der zweiten Kammer 16 ist im Dosierelement 6 in bekannter Weise eine Labyrinthanordnung angeordnet, die hier nicht dargestellt ist. Das Wasser gelangt somit aus dem Innenraum des Rohrkörpers, wo es beim Bewässerungsvorgang einen gewissen Überdruck aufweist, über die Öffnung 14 in die erste Kammer 13 und über die Labyrinthanordnung in die zweite Kammer 16, aus welcher sie über die Durchgangsöffnung 15 austreten und die entsprechende Pflanze mit Wasser versorgen kann. Wegen der Labyrinthanordnung tritt das Wasser durch die Durchgangsöffnung 15 jeweils nur tropfweise aus. Die Wahl der Labyrinthanordnung und der Überdruck, der in den Tropfbewässerungsrohren während des Bewässerungsvorganges herrscht, ergeben die Anzahl Tropfen pro Zeiteinheit, die durch die Durchgangsöffnung 15 austreten. Die Durchgangsöffnung 15 ist mit einer Abdeckung 17 versehen, die nachfolgend noch im Detail beschrieben wird, welche beim Bewässerungsvorgang durch das austretende Wasser wegdrückbar ist und das Wasser austreten lässt, und welche bei Abfall des Druckes des Wassers im Rohrkörper 1 die Durchgangsöffnung 15 verschliesst.

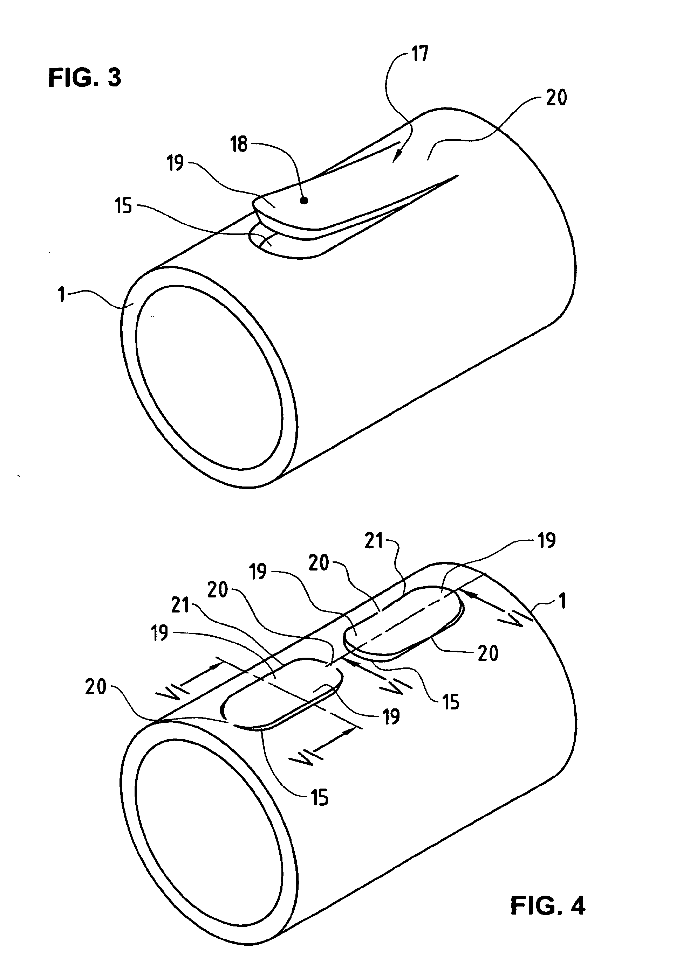

Wie aus Fig. 3 ersichtlich ist, besteht die Abdeckung 17 aus einer Klappe 18, die durch eine Zunge 19 gebildet ist, die aus der Wandung des Rohrkörpers 1 ausgeschnitten ist und die über einen stehen gelassenen Steg 20 mit dem Rohrkörper 1 verbunden bleibt. Bei Verwendung eines elastischen Materials für den Rohrkörper, insbesondere Polyethylen, wird diese Zunge 19 durch das durch die Durchgangsöffnung 15 austretende Wasser aufgedrückt, das Wasser kann in gewünschter Weise austreten. Wenn nun der Bewässerungsvorgang beendet oder unterbrochen wird, und der Druck des Wassers im Innenraum des Rohrkörpers 1 abfällt, verschliesst die Zunge 19 in Folge elastischer Verformmöglichkeit die Durchgangsöffnung 15. Dadurch wird vermieden, dass Erd- oder Schmutzpartikel in das Dosierelement im Rohrkörper 1 gelangen können, wodurch gewährleistet ist, dass das Labyrinth des Dosierelementes nicht verstopft wird. Insbesondere wenn innerhalb des Rohrkörpers 1 ein Unterdruck auftritt, können die entsprechenden Partikel auch nicht angesaugt werden.

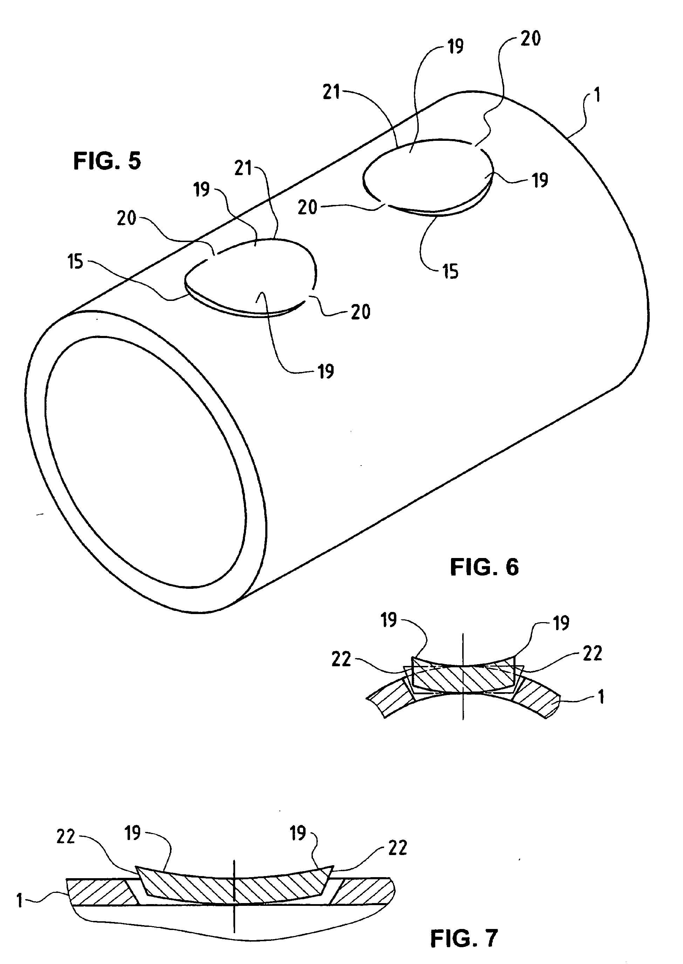

Die Fig. 4 und 5 zeigen weitere Möglichkeiten, wie die Schnittlinien 21 im Rohrkörper 1 angebracht werden können, um die entsprechenden Zungen 19 und die entsprechenden Stege 20 bilden zu können, welche Zungen 19 die Durchgangsöffnungen 15, wie vorgängig beschrieben worden ist, freigeben bzw. verschliessen können.

Aus den Schnittdarstellungen gemäss Fig. 6 und Fig. 7 ist ersichtlich, dass die entlang der Zungen 19 durch das Ausschneiden gebildeten Schnittflächen 22 konisch geneigt ausgebildet sind, derart, dass sich der so gebildete Konus gegen die Innenseite des Rohrkörpers 1 verjüngt. Dadurch wird erreicht, dass die Zungen 19 die entsprechende Durchgangsöffnung 15 in optimaler Weise verschliessen können, und sich die Schnittfläche der Zunge 19 auf der entsprechenden Schnittfläche des Rohrkörpers 1 abstützen kann.

Zum Anbringen derartiger Schnittflächen wird in vorteilhafter Weise das Laserschneiden verwendet. Als Anordnung 9 in Fig. 1 wird dann eine Laserschneidanordnung eingesetzt, mit welcher der Laserstrahl in bekannter Weise durch ein Linsensystem (beispielsweise ein Axicon) in die entsprechende Bogenform zum Ausschneiden der Zungen gebracht wird.

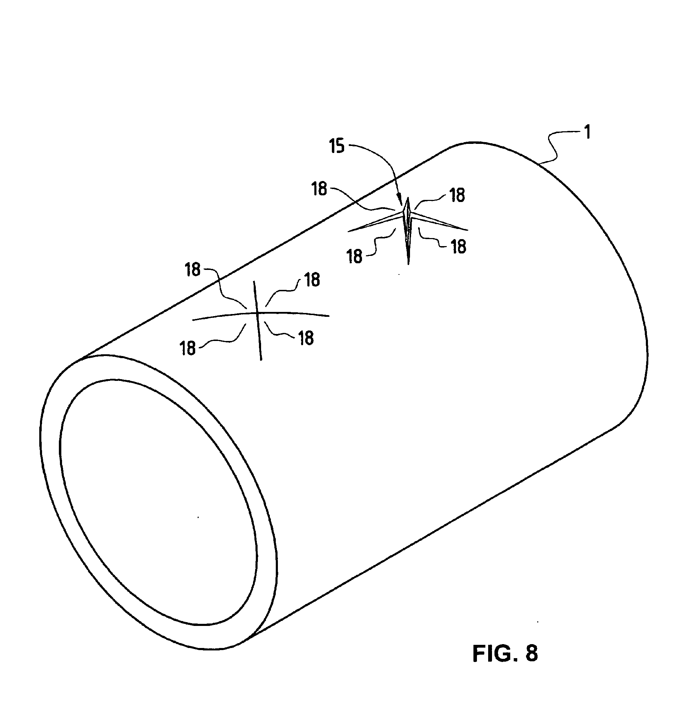

An Stelle von bogenförmigen Schnittlinien gemäss den vorhergehenden Figuren können die Schnitte im wesentlichen auch gradlinig ausgebildet sein und sich schneiden, wie dies aus Fig. 8 ersichtlich ist. Hierbei sind die Schnitte kreuzförmig angelegt, wodurch pro Durchgangsöffnung 15 im Rohrkörper 1 vier Klappen 18 gebildet werden, die, wenn bewässert werden soll und das Wasser aus der Durchgangsöffnung 15 austreten soll, aufgespreizt werden, wie dies in Fig. 8 auf der rechten Seite ersichtlich ist, während der geschlossene Zustand der Klappen 18 in Fig. 8 linksseitig dargestellt ist. Das Anbringen dieser Schnitte kann beispielsweise auch durch ein stanzförmiges Messer ausgeführt werden, die Anordnung 9 in Fig. 1 würde dann als Stanzanordnung ausgebildet, selbstverständlich können diese Schnitte aber auch mit einer entsprechend ausgebildeten Laserschneidanordnung ausgeführt werden.

Um das Aufdrücken der Klappe 18 bzw. der Zunge 19 zum Auslass von Wasser und das Verschliessen der Durchgangsöffnung 15 durch die Klappe 18 bzw. der Zunge 19 verbessern zu können, kann im Bereich des Steges 20 in das Rohrwandungsmaterial eine Kerbe 23 eingebracht werden, die sich teilweise oder vollständig über die Breite der Klappe 18 bzw. der Zunge 19 erstreckt. Dadurch wird quasi ein Scharnier für die Klappe 18 bzw. die Zunge 19 gebildet, was insbesondere bei Rohrwandungen mit grösserer Dicke vorteilhaft ist.

Mit derartig ausgebildeten Tropfbewässerungsrohren kann in optimaler Weise verhindert werden, dass Schmutzpartikel in die Labyrinthe der Dosierelemente gelangen, eine störungsfreie Bewässerung ist gewährleistet. Derartige Tropfbewässerungsrohre sind einfach und kostengünstig herzustellen.

## Patentansprüche

1. Tropfbewässerungsrohr, umfassend einen Rohrkörper (1) aus Kunststoff, der durch Extrudieren herstellbar ist, in welchen Rohrkörper (1) Dosierelemente (6) mit einem Abstand voneinander eingesetzt sind, die jeweils eine mit dem Innenraum des Rohrkörpers (1) verbundene erste Kammer (13) aufweisen, die über ein Labyrinth mit einer zweiten Kammer (16) verbunden ist, die dichtend an die Innenfläche des Rohrkörpers (1) anstösst, und in welchen Rohrkörper (1) im Bereich der zweiten Kammer (16) des Dosierelementes (6) eine die Wandung des Rohrkörpers (1) durchdringende Durchgangsöffnung (15) angebracht ist, aus welcher zum Bewässern das im Rohrkörper (1) durchgeleitete und unter Druck stehende Wasser in dosierter Menge austritt, **dadurch gekennzeichnet, dass** die Durchgangsöffnung (15) mit einer Abdeckung (17) versehen ist, die aus mindestens einer Klappe (18) gebildet ist, die im geschlossenen Zustand in der entsprechenden Durchgangsöffnung (15) liegt und beim Bewässerungsvorsgang zum Auslass von Wasser durch das austretende wasser aus der entsprechenden Durchgangsöffnung (15) wegdrückbar ist und welche bei Abfall des Druckes des Wassers im Rohrkörper (1) im wesentlichen die Duschgangsöffnung (15) verschließt, und die mindestens eine Klappe (18) aus mindestens einer Zunge (19) besteht, die aus der Wandung des Rohrkörpers (1) ausgeschnitten ist und die über mindestens einen stehen gelassenen Steg (20) mit dem Rohrkörper (1) verbunden bleibt.

2. Tropfbewässerungsrohr nach Anspruch 1, **dadurch gekennzeichnet, dass** die in die Wandung des Rohrkörpers (1) eingelassenen Schnittlinien (21) bogenförmig ausgebildet sind und dass die Schnittflächen (22) konisch geneigt sind, derart dass sich der so gebildete Konus gegen die Innenseite des Rohrkörpers (1) verjüngt.

3. Tropfbewässerungsrohr nach Anspruch 1, **dadurch gekennzeichnet, dass** die Schnitte im wesentlichen gradlinig ausgebildet sind und sich schneiden.

4. Tropfbewässerungsrohr nach Anspruch 3, **dadurch gekennzeichnet, dass** die Schnitte kreuzförmig angelegt sind.

5. Tropfbewässerungsrohr nach einem der Ansprüche 1 bis 4, **dadurch gekennzeichnet, dass** in die Wandung des Rohrkörpers (1) im Bereich des Steges (20) der Zunge (19) eine Kerbe (22) angebracht ist, die sich mindestens über einen Teil der Breite der Zunge (19) erstreckt.

## Claims

1. Drip irrigation tube, comprising a tubular body (1) of plastic, producible by extrusion, in which tubular body (1) dosing elements (6) are inserted with a spacing apart from one another, which elements each have a first chamber (13) connected to the interior of the tubular body (1), which chamber is connected via a labyrinth to a second chamber (16), which abuts in a sealing way the inner surface of the tubular body (1), and in which tubular body (1) a passage hole (15) in the region of the second chamber (16) of the dosing element (6) is provided, penetrating the walling of the tubular body (1), out of which opening the water, under pressure, conducted through the tubular body (1), emanates in dosed quantities, for irrigation, **characterised in that** the passage hole (15) is provided with a cover (17) which is formed by at least one flap (18) which, in the closed state, lies in the respective passage hole (15) and, for letting water out during the irrigation step, is able to be pressed out of the respective passage hole (15) by the escaping water, and which substantially closes off the through passage (15) upon drop in the pressure of the water in the tubular body (1), and the at least one flap (18) consists of at least one tongue (19) that is cut out of the walling of the tubular body (1) and remains connected to the tubular body (1) via at least one bridging part (20) remaining.

2. Drip irrigation tube according to claim 1, **characterised in that** cutting lines (21) made in the walling of the tubular body (1) are designed curved, and **in that** the cut surfaces (22) are inclined in a bevelled way such that the taper thus formed tapers toward the interior of the tubular body (1).

3. Drip irrigation tube according to claim 1, **characterised in that** the cuttings are designed substantially as straight lines and intersect.

4. Drip irrigation tube according to claim 3, **characterised in that** the cuttings are of cruciform design.

5. Drip irrigation tube according to one of the claims 1 to 4,
**characterised in that** made in the walling of the tubular body (1), in the region of the bridging part (20) of the tongue (19), is a notch (22), which extends at least over part of the width of the tongue (19).

## Revendications

1. Tuyau d'irrigation au goutte-à-goutte, comprenant un corps tubulaire (1) en matière plastique qui est fabriqué par extrusion, corps tubulaire (1) dans lequel sont introduits des éléments de dosage (6) à distance les uns des autres, lesquels présentent une première chambre (13) reliée à l'espace intérieur du corps tubulaire (1) et reliée par un labyrinthe à une seconde chambre (16) qui vient en butée de manière étanche à la surface interne du corps tubulaire (1) et corps tubulaire (1) dans lequel est appliquée dans la zone de la seconde chambre (16) de l'élément de dosage (6) une ouverture de passage (15) traversant la paroi du corps tubulaire (1), ouverture à partir de laquelle l'eau sous pression est guidée dans le corps tubulaire (1) et s'écoule en quantité dosée, **caractérisé en ce que** l'ouverture de passage (15) est muni d'un couvercle (1) qui se compose d'au moins un clapet (18) qui se trouve à l'état fermé dans l'ouverture de passage correspondante (15) et peut être repoussée au moment de l'opération d'irrigation pour la sortie de l'eau par l'eau sortant de l'ouverture de passage correspondante (15) et qui ferme, lors d'une chute de la pression de l'eau dans le corps tubulaire (1), essentiellement l'ouverture de passage (15), et au moins un clapet (18) se compose d'au moins une languette (19) qui est découpée dans la paroi du corps tubulaire (1) et qui reste reliée au corps tubulaire (1) par au moins une arcade verticale (20).

2. Tuyau d'irrigation au goutte-à-goutte selon la revendication 1, **caractérisé en ce que** les lignes de coupe (21) ménagée dans la paroi du corps tubulaire (1) ont une forme arquée et **en ce que** les surfaces de coupe (22) sont inclinées de manière conique de sorte que le cône ainsi formé se rétrécie en direction de la face interne du corps tubulaire (1).

3. Tuyau d'irrigation au goutte-à-goutte selon la revendication 1, **caractérisé en ce que** les coupes sont réalisées sensiblement linéaires.

4. Tuyau d'irrigation au goutte-à-goutte selon la revendication 3, **caractérisé en ce que** les coupes sont placées de manière cruciforme.

5. Tuyau d'irrigation au goutte-à-goutte selon l'une des revendications 1 à 4, **caractérisé en ce que** dans la paroi du corps tubulaire (1), dans la zone de l'arcade (20) de la languette (19), il est ménagé une encoche (22) qui s'entend au moins sur une partie de la largeur de la languette (19).
